(19) **Europäisches Patentamt / European Patent Office / Office européen des brevets**

(11) **EP 4 750 176 A1**

(12) **EUROPEAN PATENT APPLICATION**
published in accordance with Art. 153(4) EPC

(43) Date of publication:
**27.05.2026 Bulletin 2026/22**

(21) Application number: **24853702.9**

(22) Date of filing: **09.08.2024**

(51) International Patent Classification (IPC):
*H04W 56/00* (2009.01)

(52) Cooperative Patent Classification (CPC):
**H04W 36/00; H04W 56/00**

(86) International application number:
**PCT/CN2024/111089**

(87) International publication number:
**WO 2025/036293 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.08.2023 CN 202311018822**

(71) Applicant: **Huawei Technologies Co., Ltd.**
**Shenzhen, Guangdong 518129 (CN)**

(72) Inventors:
• **YUAN, Shitong**
**Shenzhen, Guangdong 518129 (CN)**
• **GU, Zhifang**
**Shenzhen, Guangdong 518129 (CN)**
• **ZHANG, Jiayin**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND APPARATUS FOR DETERMINING TIMING ADVANCE (TA)**

(57) This application provides a timing advance TA determining method and apparatus. The method may be applied to the communication field. The method includes: receiving a cell switch command sent by a serving cell; determining whether the cell switch command includes a first TA; and communicating with a target cell by using the first TA if the cell switch command includes the first TA; or communicating with the target cell by using a second TA or a third TA if the cell switch command does not include the first TA, where the second TA is a TA determined by a terminal device based on a reference signal of the serving cell and a reference signal of the target cell, and the third TA is a TA determined by the terminal device in a random access procedure initiated to the target cell after the terminal device receives the cell switch command. According to the foregoing method, when a plurality of TA obtaining manners coexist, the terminal device can correctly determine a TA for communication with the target cell, to ensure quality and stability of the communication performed by the terminal device.

_500_

FIG. 5

## Description

This application claims priority to Chinese Patent Application No. 202311018822.8, filed with the China National Intellectual Property Administration on August 11, 2023 and entitled "TIMING ADVANCE TA DETERMINING METHOD AND APPARATUS", which is incorporated herein by reference in its entirety.

## TECHNICAL FIELD

This application relates to the communication field, and more specifically, to a timing advance TA determining method and apparatus.

## BACKGROUND

In a mobile communication system, synchronization needs to be kept between a terminal device and a base station, to implement normal communication. The synchronization is implemented by measuring a reference signal that can be used for timing synchronization. The base station sends the reference signal to the mobile device, and then the mobile device performs timing transmission based on the reference signal. Because propagation of the signal in space takes some time, and the mobile device may be located at a coverage edge of the base station, resulting in a delay of signal transmission. To compensate for the delay and keep synchronization, the mobile device needs to send a signal before predetermined time, where advanced time may be referred to as a timing advance (timing advance, TA). The terminal device can communicate with the base station at a correct moment based on the timing advance.

However, during current cell switch, the terminal device needs to determine a TA for communication with a target cell, to ensure quality and stability of the communication.

## SUMMARY

This application provides a timing advance TA determining method and apparatus. When a plurality of TA obtaining manners coexist, a TA for communication with a target cell can be correctly determined, to ensure quality and stability of the communication performed by a terminal device.

According to a first aspect, a timing advance TA determining method is provided. The method includes: receiving a cell switch command sent by a serving cell; determining whether the cell switch command includes a first TA; and communicating with a target cell by using the first TA if the cell switch command includes the first TA; or communicating with the target cell by using a second TA or a third TA if the cell switch command does not include the first TA, where the second TA is a TA determined by a terminal device based on a reference signal of the serving cell and a reference signal of the target cell, and the third TA is a TA determined by the terminal device in a random access procedure initiated to the target cell after the terminal device receives the cell switch command.

The serving cell may be a cell currently connected to the terminal device. The terminal device may perform communication activities such as data transmission and a voice call by establishing a connection to the serving cell. The target cell may be a cell connected to and communicating with the terminal device after cell switch.

Optionally, the first TA included in the cell switch command may be a value of a TA, may indicate that the TA is equal to 0, or may indicate that the value of the TA is equal to a value of a TA of the current serving cell.

Optionally, the second TA may be determined based on a downlink time difference of arrival between the reference signal of the serving cell and the reference signal of the target cell.

Optionally, the random access procedure may include a contention-based random access procedure or a contention-free random access procedure.

In this embodiment of this application, after receiving the cell switch command, the terminal device may determine a TA (the first TA, the second TA, or the third TA) for communication with the target cell by determining whether the cell switch command includes the first TA. In this way, when a plurality of TA obtaining manners coexist, the terminal device can correctly determine the TA for communication with the target cell, to ensure quality and stability of the communication performed by the terminal device.

With reference to the first aspect, in some implementations of the first aspect, before the communicating with the target cell by using the first TA, the method further includes: determining that a first timer does not expire, where the first timer is a timer that starts timing after the terminal device sends a random access request to the target cell.

Optionally, the first timer may be configured by a network device for the terminal device.

In this embodiment of this application, when the cell switch command includes the first TA and the first timer does not expire, the terminal device communicates with the target cell by using the first TA. In this way, when the cell switch command includes the first TA, validity of the first TA can be further verified. This helps the terminal device correctly select the TA for communication with the target cell.

With reference to the first aspect, in some implementations of the first aspect, the second TA is obtained by the terminal device by measuring a synchronization signal block SSB of the serving cell and an SSB of the target cell at a first moment, and the communicating with the target cell by using the second TA or the third TA includes: communicating with the target cell by using the second TA if a second timer does not expire, where the second timer is a timer that starts timing from the first moment.

Optionally, the terminal device may determine the second TA by measuring a downlink time difference of arrival between the SSB of the serving cell and the SSB of the target cell.

Optionally, when the second timer expires, the terminal device may re-measure the SSB of the serving cell and the SSB of the target cell at a second moment. The second moment is later than the first moment, and the second TA obtained by the terminal device is temporarily invalid before the second moment.

In this embodiment of this application, when the cell switch command does not include the first TA and the second timer is valid, the terminal device may communicate with the target cell by using the second TA. In this way, when the cell switch command does not include the first TA, validity of the second TA can be further verified. This helps the terminal device correctly select the TA for communication with the target cell, to ensure stable and high-quality communication between the terminal device and the target cell.

With reference to the first aspect, in some implementations of the first aspect, the communicating with the target cell by using the second TA or the third TA includes: communicating with the target cell by using the third TA if the second timer expires.

In this embodiment of this application, when the cell switch command does not include the first TA and the second timer is invalid, the terminal device may communicate with the target cell by using the third TA. In this way, a loss of transmitted data caused because the terminal device incorrectly selects the TA for communication with the target cell can be avoided.

With reference to the first aspect, in some implementations of the first aspect, the communicating with the target cell by using the second TA or the third TA includes: communicating with the target cell by using the third TA if the random access procedure is a contention-free random access procedure.

In this embodiment of this application, when the cell switch command does not include the first TA, and the third TA is a TA obtained by the terminal device on a contention-free random access resource initiated by the terminal device, the terminal device may communicate with the target cell by using the third TA. In this way, when a plurality of TA obtaining manners coexist, the terminal device can correctly select a TA that needs to be used, so that the terminal device can maintain efficient communication with the target cell in a variable communication environment.

With reference to the first aspect, in some implementations of the first aspect, before the receiving the cell switch command sent by the serving cell, the method further includes: sending capability information to the serving cell, where the capability information indicates a quantity of TAs that the terminal device can obtain from the target cell or maintain for the target cell.

In this embodiment of this application, before receiving the switch command sent by the serving cell, the terminal device may report the capability information to the serving cell. The capability information is associated with subsequent TA selection behavior of the terminal device, so that the terminal device can select a qualified TA, to ensure the quality and the stability of the communication performed by the terminal device.

According to a second aspect, a timing advance TA determining method is provided. The method includes: receiving a cell switch command sent by a serving cell, where the cell switch command includes a first TA; obtaining a third TA, where the third TA is a TA determined by a terminal device in a contention-free random access procedure initiated to a target cell after the terminal device receives the cell switch command; and communicating with the target cell by using the third TA.

Alternatively, when the cell switch command does not include the first TA, the terminal device may communicate with the target cell by using the third TA.

In this embodiment of this application, even if the cell switch command includes the first TA, the terminal device may communicate with the target cell by using the third TA determined in the contention-free random access procedure. In this way, when a plurality of TA obtaining manners coexist, the terminal device can correctly determine a TA for communication with the target cell, to ensure quality and stability of the communication performed by the terminal device.

With reference to the second aspect, in some implementations of the second aspect, before the communicating with the target cell by using the third TA, the method further includes: determining that a first timer expires, where the first timer is a timer that starts timing after a random access request is sent to the target cell.

In this embodiment of this application, when the cell switch command includes the first TA and the first timer expires, the terminal device may communicate with the target cell by using the third TA. In this way, a loss of transmitted data caused by using the first TA that has become invalid to communicate with the target cell can be avoided.

With reference to the second aspect, in some implementations of the second aspect, before the receiving the cell switch command sent by the serving cell, the method further includes: sending capability information to the serving cell, where the capability information indicates a quantity of TAs that the terminal device can obtain from the target cell or maintain for the target cell.

In this embodiment of this application, before receiving the switch command sent by the serving cell, the terminal device may report the capability information to the serving cell. The capability information is associated with subsequent TA selection behavior of the terminal device, so that the terminal device can select a qualified TA, to ensure the quality and the stability of the communication.

According to a third aspect, a timing advance TA obtaining method is provided. The method includes: obtaining a second TA and a third TA, where the second TA is a TA determined by a terminal device based on a reference signal of a serving cell and a reference signal of a target cell, and the third TA is a TA determined by the terminal device in a random access procedure initiated to the target cell after the terminal device receives a cell switch command; and determining, according to a preset rule, a target TA for communication with the target cell.

Optionally, the preset rule may be that priorities of the second TA and the third TA are defined. When the defined priority of the second TA is higher than the defined priority of the third TA, the target TA may be the second TA. When the defined priority of the third TA is higher than the defined priority of the second TA, the target TA may be the third TA.

Optionally, when the third TA is a TA obtained in a contention-free random access procedure, the preset rule or the defined priority may be: preferentially using the third TA, that is, the target TA is the third TA.

Optionally, when the third TA is a TA obtained in a contention-based random access procedure, the preset rule or the defined priority may be: preferentially using the second TA, that is, the target TA is the second TA.

In this embodiment of this application, when a TA autonomously obtained by the terminal device and a TA obtained in a random access procedure coexist, the TA for communication with the target cell may be determined according to the preset rule. In this way, when a plurality of TA obtaining manners coexist, the terminal device can correctly determine the TA for communication with the target cell, to ensure quality and stability of the communication performed by the terminal device.

According to a fourth aspect, a timing advance TA determining apparatus is provided. The apparatus includes: a transceiver unit, configured to receive a cell switch command sent by a serving cell; and a processing unit, configured to: determine whether the cell switch command includes a first TA; and communicate with a target cell by using the first TA if the cell switch command includes the first TA; or communicate with the target cell by using a second TA or a third TA if the cell switch command does not include the first TA, where the second TA is a TA determined by a terminal device based on a reference signal of the serving cell and a reference signal of the target cell, and the third TA is a TA determined by the terminal device in a random access procedure initiated to the target cell after the terminal device receives the cell switch command.

With reference to the fourth aspect, in some implementations of the fourth aspect, the processing unit is further configured to determine that a first timer does not expire, where the first timer is a timer that starts timing after the terminal device sends a random access request to the target cell.

With reference to the fourth aspect, in some implementations of the fourth aspect, the second TA is obtained by the terminal device by measuring a synchronization signal block SSB of the serving cell and an SSB of the target cell at a first moment. The processing unit is specifically configured to: communicate with the target cell by using the second TA if a second timer does not expire, where the second timer is a timer that starts timing from the first moment.

With reference to the fourth aspect, in some implementations of the fourth aspect, the processing unit is specifically configured to: communicate with the target cell by using the third TA if the second timer expires.

With reference to the fourth aspect, in some implementations of the fourth aspect, the processing unit is specifically configured to: communicate with the target cell by using the third TA if the random access procedure is a contention-free random access procedure.

With reference to the fourth aspect, in some implementations of the fourth aspect, the transceiver unit is further configured to send capability information to the serving cell, where the capability information indicates a quantity of TAs that the terminal device can obtain from the target cell or maintain for the target cell.

According to a fifth aspect, a timing advance TA determining apparatus is provided. The apparatus includes: a transceiver unit, configured to receive a cell switch command sent by a serving cell, where the cell switch command includes a first TA; and a processing unit, configured to: obtain a third TA, where the third TA is a TA determined by a terminal device in a contention-free random access procedure initiated to a target cell after the terminal device receives the cell switch command; and communicate with the target cell by using the third TA.

With reference to the fifth aspect, in some implementations of the fifth aspect, the processing unit is further configured to determine that a first timer expires, where the first timer is a timer that starts timing after a random access request is sent to the target cell.

With reference to the fifth aspect, in some implementations of the fifth aspect, the transceiver unit is further configured to send capability information to the serving cell, where the capability information indicates a quantity of TAs that the terminal device can obtain from the target cell or maintain for the target cell.

With reference to the fifth aspect, in some implementations of the fifth aspect, the apparatus includes at least one processor and a memory. The at least one processor is coupled to the memory, and is configured to read and execute instructions in the memory, to cause the apparatus to implement the method according to any one of the implementations of the first aspect or the second aspect.

According to a sixth aspect, a timing advance TA determining apparatus is provided. The apparatus includes: a processing unit, configured to: obtain a second TA and a third TA, where the second TA is a TA determined by a terminal device based on a reference signal of a serving cell and a reference signal of a target cell, and the third TA is a TA determined by the terminal device in a random access procedure initiated to the target cell after the terminal device receives a cell switch command; and determine, according to a preset rule, a target TA for communication with the target cell.

According to a seventh aspect, a timing advance TA determining apparatus is provided. The apparatus includes a processor. The processor is configured to be coupled to a memory, and read and execute instructions and/or program code in the memory, to perform the method according to any one of the implementations of the first aspect to the third aspect.

According to an eighth aspect, a computer-readable storage medium is provided. The computer-readable storage medium stores program code. When the computer program code is run on a computer, the computer is caused to perform the method according to any one of the implementations of the first aspect to the third aspect.

According to a ninth aspect, a chip is provided. The chip includes a circuit. The circuit is configured to perform the method according to any one of the implementations of the first aspect to the third aspect.

According to a tenth aspect, a computer program product is provided. The computer product includes a computer program. When the computer program is run, a computer is caused to perform the method according to any one of the implementations of the first aspect to the third aspect.

According to an eleventh aspect, a terminal device is provided, including the apparatus in any one of the implementations of the fourth aspect to the sixth aspect.

## BRIEF DESCRIPTION OF DRAWINGS

FIG. 1 is a diagram of a method for obtaining, by a terminal device, uplink timing synchronization for an unconnected cell according to an embodiment of this application;

FIG. 2 is a diagram of obtaining a TA by a terminal device in a plurality of manners according to an embodiment of this application;

FIG. 3 is a diagram of a system architecture to which a timing advance TA determining method is applicable according to an embodiment of this application;

FIG. 4 is a diagram of an application scenario of a timing advance TA determining method according to an embodiment of this application;

FIG. 5 is a schematic flowchart of a timing advance TA determining method according to an embodiment of this application;

FIG. 6 is a schematic flowchart of a timing advance TA determining method according to an embodiment of this application;

FIG. 7 is a schematic flowchart of another timing advance TA determining method according to an embodiment of this application;

FIG. 8 is a diagram of a timing advance TA determining apparatus according to an embodiment of this application; and

FIG. 9 is a diagram of another timing advance TA determining apparatus according to an embodiment of this application.

## DESCRIPTION OF EMBODIMENTS

The following describes technical solutions of embodiments of this application with reference to accompanying drawings.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, a new radio (new radio, NR) system, or the like.

A terminal device in embodiments of this application may be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may alternatively be a cellular phone, a cordless phone, a session initiation protocol (Session Initiation Protocol, SIP) phone, a wireless local loop (wireless local loop, WLL) station, a personal digital assistant (personal digital assistant, PDA), a handheld device having a wireless communication function, a compute device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

A network device in embodiments of this application may be a device configured to communicate with the terminal device. The network device may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (Wideband Code Division Multiple Access, WCDMA) system, may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a future 5G network, a network device in a future evolved PLMN network, or the like. This is not limited in embodiments of this application.

For ease of understanding of embodiments of this application, concepts and technologies related to embodiments of this application are first briefly described.

1. Beam (beam): The beam is a communication resource. The beam may be a wide beam, a narrow beam, or another type of beam. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent by using different beams. Optionally, a plurality of beams having a same or similar communication feature may be considered as one beam. One beam may include one or more antenna ports, configured to perform transmission of a data channel, a control channel, a sounding signal, and the like. For example, a transmit beam may be distribution of signal strength formed in different directions in space after a signal is transmitted through an antenna, and a receive beam may be distribution of signal strength, in different directions in space, of a radio signal received from an antenna. It may be understood that one or more antenna ports forming one beam may also be considered as one antenna port set.

When a low frequency band or an intermediate frequency band is used, a signal may be sent omnidirectionally or sent at a wide angle. When a high frequency band is used, because of a small carrier wavelength of a high frequency communication system, antenna arrays formed by a plurality of antenna elements may be disposed at a transmit end and a receive end. The transmit end sends a signal by using a specific beamforming weight, so that the sent signal forms a spatially directional beam, and the receive end receives the signal through the antenna array by using a specific beamforming weight, so that received power of the signal at the receive end can be increased, and a path loss can be prevented.

2. Reference signal (reference signal): Based on a long term evolution LTE/NR protocol, at a physical layer, uplink communication includes transmission of uplink physical channels and uplink signals. The uplink physical channels include a random access channel (random access channel, PRACH), a PUCCH, a PUSCH, and the like. The uplink signals include a channel sounding signal SRS, an uplink control channel demodulation reference signal (PUCCH demodulation reference signal, PUCCH-DMRS), an uplink data channel demodulation reference signal PUSCH-DMRS, an uplink phase noise tracking signal (phase noise tracking reference signal, PTRS), an uplink positioning signal (uplink positioning RS), and the like. Downlink communication includes transmission of downlink physical channels and downlink signals. The downlink physical channels include a broadcast channel (physical broadcast channel, PBCH), a downlink control channel (physical downlink control channel, PDCCH), a PDSCH, and the like. The downlink signal includes a primary synchronization signal (primary synchronization signal, PSS for short)/secondary synchronization signal (secondary synchronization signal, SSS), a downlink control channel demodulation reference signal PDCCH-DMRS, a downlink data channel demodulation reference signal PDSCH-DMRS, a phase noise tracking signal PTRS, a channel state information reference signal (channel status information reference signal, CSI-RS), a cell signal (cell reference signal, CRS) (not available in NR), a fine synchronization signal (time/frequency tracking reference signal, TRS) (not available in LTE), an LTE/NR positioning signal (positioning RS), and the like.

3. Switch command (cell switch command, CSC): In the 3rd generation partnership project (3rd generation partnership project, 3GPP) standard, a switch command sent based on MAC CE signaling is newly defined in a Rel-18 mobility subject. Messages that may be carried in the signaling include an identifier (which may be a configured logical identifier instead of a cell identifier) of a target cell (cell group), beam indication information (for example, a TCI state identifier), a value of a TA, and an uplink bandwidth part (bandwidth part, BWP) identifier and/or a downlink bandwidth part identifier.

The following describes technical problems to be resolved and technical solutions in this application with reference to the accompanying drawings.

In a mobile communication system, synchronization needs to be kept between a terminal device and a base station, to implement normal communication. The synchronization is implemented by measuring a reference signal that can be used for timing synchronization. The base station sends the reference signal to the mobile device, and then the mobile device performs timing transmission based on the reference signal. Because propagation of the signal in space takes some time, and the mobile device may be located at a coverage edge of the base station, resulting in a delay of signal transmission. To compensate for the delay and keep synchronization, the mobile device needs to send the signal before predetermined time, where advanced time may be referred to as a TA. The terminal device can communicate with the base station at a correct moment based on the TA.

During cell switch, to reduce service interruptions caused because the terminal device obtains a TA of a target cell, the 3GPP standard supports a plurality of optional solutions, including two categories: early-random access channel (random access channel, RACH) and non-early-RACH.

The early-RACH solution allows UE to obtain a TA of a neighboring cell before the switch, and specifically includes PDCCH-ordered CFRA. Details are as follows:

A serving cell delivers a PDCCH to indicate the UE to initiate a contention-free random access (contention-free random access, CFRA) procedure to the target cell. A network side does not respond with a random access response (random access response, RAR), so that the UE does not need to wait for and monitor the RAR, thereby reducing interruptions. In this case, the TA is carried in a CSC.

The non-early-RACH solution may include two branches: a manner in which the terminal device determines the TA before the switch, and a manner in which the terminal device sends, after the switch, a RACH to obtain the TA.

1. The terminal device obtains the TA before the cell switch, to be specific, the terminal device may calculate the TA by measuring a downlink time difference of arrival between the serving cell and the target cell. In a possible implementation, the terminal device may obtain the TA through calculation according to the following formula:

$$Target\_TA=Source\_TA+2RSTD+TA\_NT\_Adj\_Factor$$

Target_TA may represent a value of the TA that is of the target cell and that needs to be obtained by the terminal. Source_TA may be a TA used by the terminal device to send an uplink signal in the serving cell. RSTD may represent a time difference of arrival between a downlink reference signal of a current cell (current serving cell) and a downlink reference signal of the neighboring cell that are received by the terminal device. TA_NT_Adj_Factor may represent a compensation amount that is sent by a network device to the terminal device and that is for calculating the TA. A physical meaning of TA_NT_Adj_Factor may be representing a downlink sending time difference between the two cells.

2. After the cell switch, the terminal device sends the RACH to obtain the TA. To be specific, after receiving a switch command, the terminal device obtains the TA of the new cell in a RACH procedure. This procedure cannot significantly reduce interruptions caused because the UE initiates, after the switch command is delivered, the RACH to obtain the TA (the UE needs to wait for a RACH occasion for the target cell after the switch command, and wait for a network response after sending a preamble, where during this period, the UE is neither connected to the serving cell nor connected to the new cell). Therefore, this solution is a fallback approach.

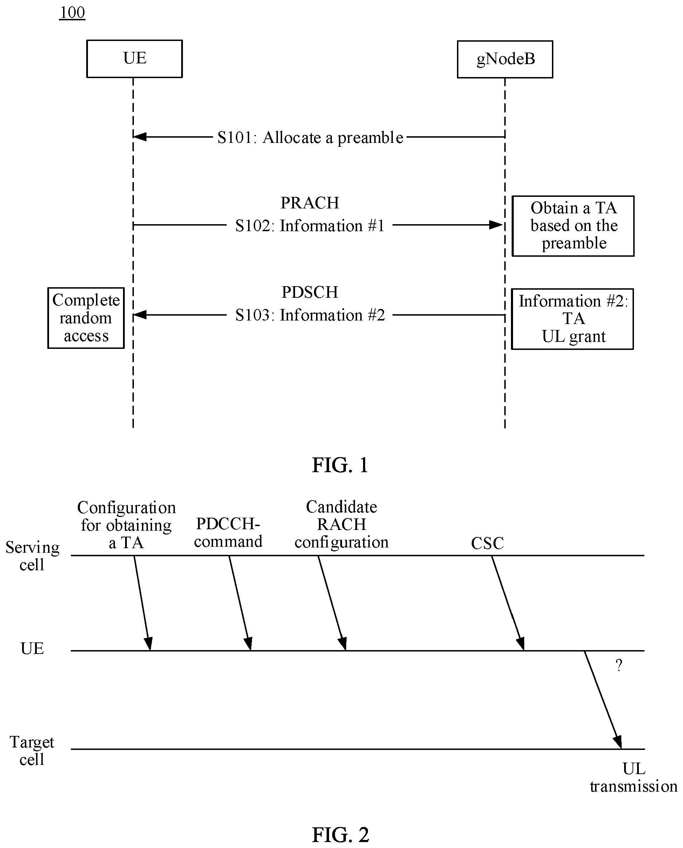

The following uses FIG. 1 as an example to describe a non-contention-based (also referred to as contention-free) random access procedure.

As shown in FIG. 1, because no conflict needs to be resolved, a gNodeB may identify, based on a pre-allocated preamble (preamble) and a RACH resource position, which terminal device sends a random access request (namely, information #1 in FIG. 1, where the information #1 includes the preamble). In addition, the gNodeB may estimate a TA based on the preamble in the information #1, and send information #2 to the terminal device, where the information #2 includes the TA, so that the terminal device completes a random access procedure based on the TA. This ensures that the terminal device can communicate with the gNodeB at a correct moment.

However, during current cell switch, the terminal device may obtain the TA in any one or more of a plurality of manners such as based on a configuration or an indication of a serving cell. For example, in the scenario shown in FIG. 2, the terminal device may obtain the TA in any one or more of the plurality of manners, including: The terminal device may autonomously obtain the TA based on the configuration of the serving cell (that is, a configuration for obtaining the TA in FIG. 2), obtain the TA in the serving cell through contention-free random access (that is, a PDCCH order in FIG. 2), or obtain the TA based on a switch command (that is, a CSC in FIG. 2, where the TA may be a TA obtained previously based on a RACH triggered by a PDCCH, may be a TA obtained by directly setting a value of the TA to 0 in the serving cell, or may be a TA that is indicated by the serving cell and whose value is the same as a value of a TA used in the current serving cell). When the plurality of TA obtaining manners coexist, the terminal device needs to determine a TA for communication with a target cell, to ensure quality and stability of the communication.

Embodiments of this application provide a timing advance TA determining method and apparatus. When a plurality of TA obtaining manners coexist, a terminal device can correctly determine a TA for communication with a target cell, to ensure quality and stability of the communication performed by the terminal device.

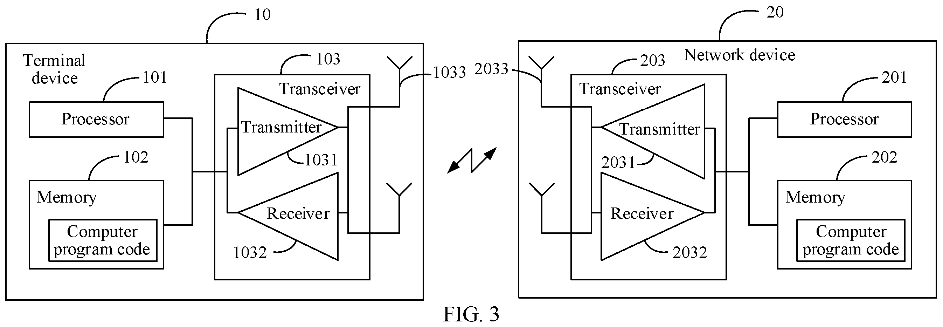

FIG. 3 is a diagram of a system architecture to which a timing advance TA determining method is applicable according to an embodiment of this application.

As shown in FIG. 3, the architecture includes a terminal device 10 and a network device 20. The terminal device 10 may communicate with the network device 20. The terminal device 10 may include a processor 101, a memory 102, and a transceiver 103. The transceiver 103 includes a transmitter 1031, a receiver 1032, and an antenna 1033. The network device 20 may include a processor 201, a memory 202, and a transceiver 203. The transceiver 203 includes a transmitter 2031, a receiver 2032, and an antenna 2033. The receiver 1032 may be configured to receive transmission control information via the antenna 1033, and the transmitter 1031 may be configured to send transmission feedback information to the network device 20 via the antenna 1033. The transmitter 2031 may be configured to send the transmission control information to the terminal device 10 via the antenna 2033, and the receiver 2032 may be configured to receive, via the antenna 2033, the transmission feedback information sent by the terminal device 10.

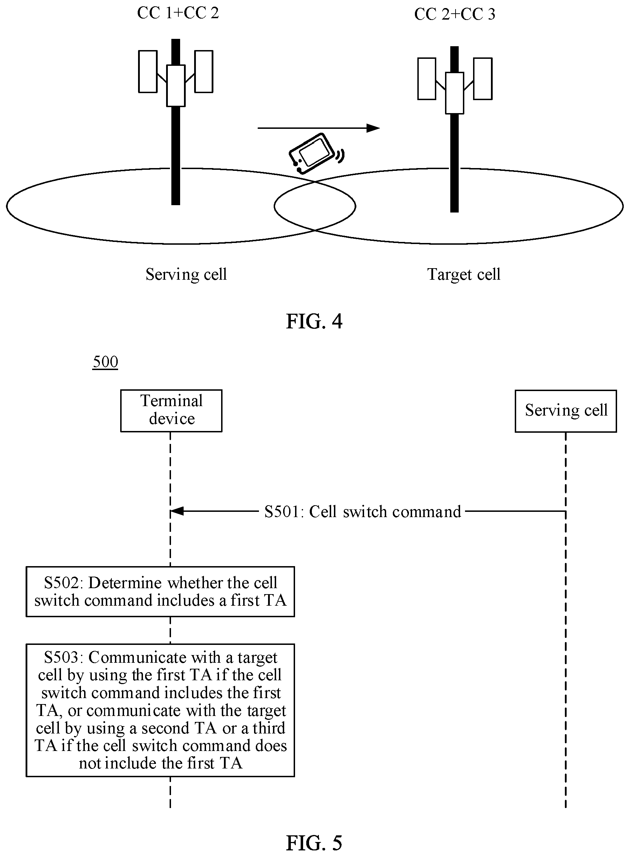

FIG. 4 is a diagram of an application scenario of a timing advance TA determining method according to an embodiment of this application.

As shown in FIG. 4, the scenario includes a network device and a terminal device. The network device may transmit data or control instructions to the terminal device. After receiving the transmitted data or the control instructions sent by the network device, the terminal device may report a measurement result (corresponding to a beam) of a reference signal based on configuration information of the network device, to switch a serving beam of the terminal device. A plurality of carriers may be configured in each cell, and the carrier may be a carrier component (carrier component, CC) in FIG. 4. In a protocol, the carrier may also be referred to as a serving cell. In addition, the scenario shown in FIG. 4 is a scenario in which a single terminal device and a single network device are used as an example. The scenario may alternatively include a plurality of terminal devices and a plurality of network devices.

FIG. 5 is a schematic flowchart of a timing advance TA determining method according to an embodiment of this application. The method 500 may be applied to the system architecture shown in FIG. 3 and the application scenario shown in FIG. 4. The method 500 may include the following steps.

S501: A terminal device receives a cell switch command sent by a serving cell.

Optionally, the cell switch command may be a CSC, and the cell switch command may carry a first TA, or may not carry the first TA.

Optionally, the first TA included in the cell switch command may be a value of a TA, may indicate that the TA is equal to 0, or may indicate that the value of the TA is equal to a value of a TA of the current serving cell.

In an embodiment, before step S501, the method 500 further includes: The terminal device sends capability information to the serving cell, where the capability information indicates a quantity of TAs that the terminal device can obtain from a target cell or maintain for the target cell. The capability information may be associated with subsequent TA selection behavior of the terminal device, so that the terminal device can select a qualified TA, to ensure quality and stability of communication.

S502: The terminal device determines whether the cell switch command includes the first TA.

S503: The terminal device communicates with the target cell by using the first TA if the cell switch command includes the first TA, or communicates with the target cell by using a second TA or a third TA if the cell switch command does not include the first TA.

The second TA is a TA determined by the terminal device based on a reference signal of the serving cell and a reference signal of the target cell, and the third TA is a TA determined by the terminal device in a random access procedure initiated to the target cell after the terminal device receives the cell switch command.

The serving cell may be a cell currently connected to the terminal device. The terminal device may perform communication activities such as data transmission and a voice call by establishing a connection to the serving cell. The target cell may be a cell connected to and communicating with the terminal device after cell switch.

Optionally, the second TA may be specifically determined based on a downlink time difference of arrival between the reference signal of the serving cell and the reference signal of the target cell.

Optionally, the corresponding random access procedure in which the third TA is obtained may include a contention-based random access procedure or a contention-free random access procedure.

In this embodiment of this application, after receiving the cell switch command, the terminal device may determine a TA (the first TA, the second TA, or the third TA) for communication with the target cell by determining whether the cell switch command includes the first TA. In this way, when a plurality of TA obtaining manners coexist, the TA for communication with the target cell can be correctly determined, to ensure quality and stability of the communication performed by the terminal device.

In an embodiment, if the cell switch command includes the first TA, before the terminal device communicates with the target cell by using the first TA, the method 500 further includes: determining that a first timer does not expire, where the first timer is a timer that starts timing after the terminal device sends a random access request to the target cell. In this way, when the cell switch command includes the first TA, the terminal device can further verify validity of the first TA. This helps the terminal device correctly select the TA for communication with the target cell.

Optionally, the first timer may be a timer that starts timing from a time point that is after the terminal device initiates a last random access request triggered by a PDCCH.

Optionally, the first timer may be configured by a network device for the terminal device.

Alternatively, the terminal device may not communicate with the target cell by using the first TA if the first timer expires.

In an embodiment, if the cell switch command does not include the first TA, and the second TA is obtained by the terminal device by measuring a synchronization signal block SSB of the serving cell and an SSB of the target cell at a first moment, the terminal device may select, when a second timer does not expire, the second TA for communication with the target cell. The second timer is a timer that starts timing from the first moment. In this way, when the cell switch command does not include the second TA, the terminal device can further verify validity of the second TA. This helps the terminal device correctly select the TA for communication with the target cell, to ensure stable and high-quality communication between the terminal device and the target cell.

The second timer may be understood as time during which the timing is maintained without drift (for example, an error requirement specified in a protocol needs to be met) after one measurement. That the second timer expires may be understood as that the second TA may no longer be accurate, and is no longer applicable to data communication with the target cell after switch.

Optionally, when the second timer expires, the terminal device may re-measure the SSB of the serving cell and the SSB of the target cell at a second moment. The second moment is later than the first moment, and the second TA obtained by the terminal device is temporarily invalid before the second moment.

In an embodiment, if the cell switch command does not include the first TA and the second timer expires, the terminal device may select the third TA for communication with the target cell. In this way, a loss of transmitted data caused because the terminal device incorrectly selects a TA for communication with the target cell can be avoided.

In an embodiment, if the cell switch command does not include the first TA, and the corresponding random access procedure in which the third TA is obtained is a contention-free random access procedure, the terminal device may communicate with the target cell by using the third TA. In this way, when a plurality of TA obtaining manners coexist, the terminal device can correctly select the TA that needs to be used, to ensure that the terminal device can maintain efficient communication with the target cell in a variable communication environment.

In an embodiment, when the switch command does not include the TA, the terminal device may communicate with the target cell by using the second TA or the third TA based on a predefined priority.

Optionally, the priority may be as follows: If a CFRA resource exists after the cell switch, the terminal device may obtain the third TA in the CFRA procedure after the cell switch, and communicate with the target cell by using the third TA.

Optionally, the priority may be as follows: If no CFRA resource exists after the cell switch, the terminal device may obtain the third TA in the contention-based random access procedure after the cell switch, and communicate with the target cell by using the second TA.

Optionally, the priority may be as follows: If no CFRA resource exists after the cell switch, the terminal device may obtain the third TA in the contention-based random access procedure after the cell switch, and communicate with the target cell by using the third TA.

Optionally, the priority may be a priority configured by the network device, or a priority configured for each cell/TAG.

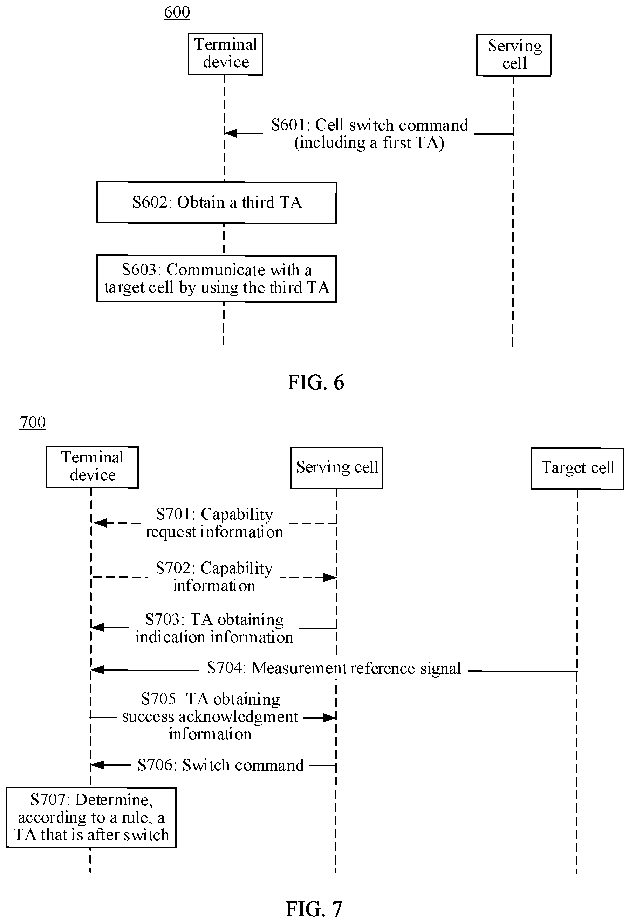

FIG. 6 is a schematic flowchart of another timing advance TA determining method according to an embodiment of this application. The method 600 may be applied to the system architecture shown in FIG. 3 and the application scenario shown in FIG. 4. The method 600 may include the following steps.

S601: A terminal device receives a cell switch command sent by a serving cell.

Optionally, the cell switch command may be a CSC, and the cell switch command may carry a first TA.

Optionally, the first TA included in the cell switch command may be a value of a TA, may indicate that the TA is equal to 0, or may indicate that the value of the TA is equal to a value of a TA of the current serving cell.

In an embodiment, before step S601, the method 600 further includes: The terminal device sends capability information to the serving cell, where the capability information indicates a quantity of TAs that the terminal device can obtain from a target cell or maintain for the target cell. The capability information may be associated with subsequent TA selection behavior of the terminal device, so that the terminal device needs to determine a TA for communication with the target cell, to ensure quality and stability of the communication performed by the terminal device.

S602: The terminal device obtains a third TA.

The third TA is a TA determined by the terminal device in a contention-free random access procedure initiated to the target cell after the terminal device receives the cell switch command.

S603: The terminal device communicates with the target cell by using the third TA.

Alternatively, when the cell switch command does not include the first TA, the terminal device may communicate with the target cell by using the third TA.

In this embodiment of this application, even if the cell switch command includes the first TA, the terminal device may communicate with the target cell by using the third TA determined in the contention-free random access procedure. In this way, when a plurality of TA obtaining manners coexist, the TA for communication with the target cell can be correctly determined, to ensure the quality and the stability of the communication performed by the terminal device.

In an embodiment, before step S603, the method 600 further includes: The terminal device determines that a first timer expires, where the first timer is a timer that starts timing after a random access request is sent to the target cell. In this way, a loss of transmitted data caused because the terminal device communicates with the target cell by using the first TA that has become invalid can be avoided.

FIG. 7 is a schematic flowchart of another timing advance TA determining method according to an embodiment of this application. The method 700 may provide detailed descriptions of steps in the method 500 and the method 600. The method 700 may include the following steps.

S701: A serving cell sends capability request information to a terminal device.

The serving cell may be a cell currently connected to the terminal device. The terminal device may perform communication activities such as data transmission and a voice call by establishing a connection to the serving cell.

S702: The terminal device sends capability information to the serving cell.

For example, the capability information indicates a quantity of TAs that the terminal device can obtain from a target cell or a non-serving cell in a cell or maintain for the target cell or the non-serving cell.

Optionally, a capability in the capability information may be a quantity of timing advance groups (timing advance groups, TAGs) or a quantity of TAs that the terminal device can maintain for each target cell. The quantity of TAs may be a total quantity of TAs obtained by each terminal device from the target cell, a total quantity of TAs that the terminal device can obtain or maintain in each frequency band (band), or a total quantity of TAs that the terminal device can obtain or maintain in each frequency range (frequency range, FR). The total quantity of TAs obtained or maintained by the terminal device in each FR may include a TA of the current serving cell, or may not include the TA of the current serving cell.

Optionally, in the method 700, steps S701 and S702 may not be performed, and step S703 may be directly performed.

S703: The serving cell sends TA obtaining indication information to the terminal device.

The TA obtaining indication information indicates a reference signal or reference signals based on which the terminal device obtains a corresponding TA. The TA obtaining indication information may include a neighboring cell identifier. The neighboring cell identifier may be one or more of a synchronization signal block (synchronization signal block, SSB) index, a neighboring cell channel state information reference signal (channel state information reference signal, CSI-RS) resource or resource set identifier, or a measurement resource identifier of a reference signal of an associated neighboring cell.

Optionally, the TA obtaining indication information further includes an identifier of a TAG, in the associated neighboring cell, for an obtained TA.

It should be understood that the associated neighboring cell may be a target cell corresponding to a terminal cell after the terminal cell performs cell switch.

Optionally, the TA obtaining indication information may further include a time difference between downlink sending time of a target reference signal or cell and downlink sending time of the current serving cell. In a possible implementation, for a calculating manner of the time difference, only a formula may be defined in a protocol. The formula may include an offset (offset), and a physical meaning of the offset may be provided or may not be provided in the protocol. The offset item in the calculation method or formula provided in the protocol is optional, or the offset item may not exist. If a network device does not configure the offset for the terminal device, a default value of the offset may be 0.

Optionally, in a process of obtaining the TA, the terminal device may perform rate matching on data transmission of the serving cell or set a measurement gap (gap) during measurement. The rate matching may mean that a to-be-measured reference signal resource exists in scheduled consecutive time-frequency resources for the terminal device. Therefore, a data signal cannot be mapped to a resource grid in which the reference signal exists. The measurement gap may be a time window set for measurement, and the terminal device does not expect to communicate with the serving cell in the time window.

In an embodiment, if the TA obtained by the terminal device based on the TA obtaining indication information exceeds a maximum capability limit of the terminal device, the terminal device releases an earliest obtained TA under the same capability limit.

For example, the terminal device may maintain a maximum of two TAs. If the serving cell indicates, to the terminal device, that an additional TA needs to be obtained, the terminal device may release a TA that is obtained earlier in two maintained TAs.

Optionally, if the protocol allows to configure a plurality of TAs at one time by using signaling, the terminal device may release a TA with a smaller index identifier. The index identifier may include an RS ID or a physical cell identity (physical cell identity, PCI). The foregoing process may be specifically indicated by using a medium access control control element (medium access control control element, MAC CE). The MAC CE may include a plurality of reference signal identifiers used for TA measurement and/or a plurality of corresponding cell identifiers.

In an embodiment, after step S703 is performed, the terminal device may no longer obtain TAs whose quantity exceeds a reported capability, until the terminal device receives TA obtaining deactivation information sent by the serving cell.

Optionally, the TA obtaining deactivation information may explicitly indicate the terminal device to release or stop maintaining a specific TA. A released TA is no longer allowed to be used when the terminal device performs cell switch subsequently. In other words, in a subsequent process, if a CSC does not include a TA, the terminal device may initiate a RACH procedure after performing cell switch.

S704: The target cell sends a measurement reference signal to the terminal device.

The terminal device may autonomously obtain a TA based on the measurement reference signal and a reference signal of the serving cell. The TA autonomously obtained by the terminal device may be the second TA in the method 500.

S705: The terminal device sends TA obtaining success acknowledgment information to the serving cell.

Optionally, if the TA obtained by the terminal device becomes invalid (for example, a specified SSB is no longer measured, and consequently the TA is no longer applicable) in the subsequent procedure, the terminal device may report TA invalidation information to the serving cell.

S706: The serving cell sends a cell switch command CSC to the terminal device.

Optionally, the CSC may carry a TA, or may not carry a TA. When the CSC carries a TA, the TA may be the first TA in the method 500 and the method 600.

S707: The terminal device determines, according to a rule, a TA that is after the cell switch.

In an embodiment, the foregoing rule may be as follows: When the CSC includes a TA, the terminal device may determine the TA based on an indication of the CSC. A value of the TA may be obtained based on a contention-free random access (contention free random access-free, RAR-free) PDCCH-ordered RACH procedure, may be obtained by indicating that the TA is equal to 0, or may be obtained by indicating that the value of the TA is equal to a value of the TA of the current serving cell. A manner of obtaining the value of the TA is not limited in this embodiment of this application.

In an embodiment, the foregoing rule may be as follows: When the CSC does not include a TA and the target cell has a maintained TA (corresponding to that the terminal device autonomously obtains a TA), the terminal device may communicate with the target cell by using the autonomously obtained TA. When the terminal device performs communication by using the autonomously obtained TA, the serving cell may know that the terminal device has successfully autonomously obtained the TA, and the serving cell may need to explicitly indicate, by using the CSC, the terminal device to use the TA.

In an embodiment, the foregoing rule may be as follows: When the CSC does not include a TA and the terminal device does not autonomously obtain a TA, the terminal device may first perform cell switch, and after the cell switch, the terminal device obtains a TA in the RACH procedure. The TA may be the third TA in the method 500 and the method 600.

Optionally, in the foregoing several embodiments, when a CFRA resource is configured in RRC information sent by the serving cell to the terminal device, regardless of whether the terminal device has a valid TA, after performing cell switch, the terminal device may initiate a CFRA procedure to obtain a TA. The TA may be the third TA in the method 500 and the method 600. Alternatively, the terminal device may ignore and release the CFRA resource, and use the autonomously obtained TA.

In step S707, for a same target cell, when a plurality of TA obtaining manners coexist, the terminal device may use a TA obtained in only one of the manners.

For example, when the TA autonomously obtained by the terminal device and a TA indicated by PDCCH-ordered CFRA coexist, the terminal device may abandon the autonomously obtained TA, instead of using both the TAs obtained in the foregoing two manners.

In step S707, the rule that the terminal device follows may be a protocol-defined priority for the terminal device and the serving cell.

Optionally, the priority may be as follows: When the CSC includes a TA, the terminal device preferentially uses the TA indicated by the CSC, and ignores the TA autonomously obtained by the terminal device.

Optionally, the priority may be as follows: When a CFRA resource exists after the cell switch, the terminal device may first perform cell switch, and then initiate, after the switch, the CFRA procedure to obtain a TA, and ignore the TA autonomously obtained by the terminal device.

Optionally, the priority may be as follows: When the CSC includes a TA and a CFRA resource exists after the cell switch, the terminal device uses the autonomously obtained TA.

Optionally, the priority may be as follows: When the terminal device can autonomously obtain a TA and a CFRA resource exists after the cell switch, the terminal device uses the TA obtained in the CFRA procedure initiated after the cell switch.

Optionally, the priority may be as follows: When the terminal device can autonomously obtain a TA and no CFRA resource exists after the cell switch, the terminal device uses the TA obtained in the RACH procedure after the cell switch.

Optionally, the priority may be as follows: When the terminal device can autonomously obtain a TA and no CFRA resource exists after the cell switch, the terminal device uses the autonomously obtained TA.

Optionally, the priority may be a priority configured by the network device, or a priority configured for each cell/TAG.

Before step S706, if the serving cell configures a first timer for the terminal device, in step S707, the terminal device may determine, with reference to a timeout status of the first timer and the rule, a TA used after the cell switch.

In an embodiment, for the target cell, when the terminal device autonomously obtains a TA, after receiving DCI, the terminal device may send a random access request to the target cell. The random access request indicates to send CFRA to the terminal device. The first timer starts timing from a time point that is after the terminal device initiates a last random access request. (Because a random access request sent by the terminal device at one time may not be received by the target cell, the terminal device may send a random access request to the same target cell a plurality of times).

In an embodiment, when the CSC sent by the serving cell to the terminal device includes a TA and the first timer does not expire, the terminal device may use the TA indicated by the CSC as the TA that is after the cell switch. In other words, a priority of the TA indicated by the CSC is higher than a priority of the TA autonomously obtained by the terminal device.

In an embodiment, when the CSC sent by the serving cell to the terminal device includes a TA and the first timer expires, the terminal device may use the autonomously obtained TA as the TA that is after the cell switch.

In an embodiment, when the CSC sent by the serving cell to the terminal device includes a TA, the first timer expires, and the terminal device does not autonomously obtain a TA (or is incapable of autonomously obtaining a TA), the terminal device may initiate, after the cell switch, the RACH procedure to obtain the TA. In other words, the terminal device may ignore the TA included in the CSC in this case.

In step S703, if the TA autonomously obtained by the terminal device is obtained through one measurement, to be specific, the terminal device performs measurement calculation based on an SSB of a neighboring cell (the target cell) once rather than periodic measurement, and the terminal device may obtain a second timer, where the second timer represents a validity period of the TA obtained after the terminal device performs measurement once.

Optionally, that the second timer expires may be understood as time during which the timing is maintained without drift after the terminal device performs measurement once. The drift-free time may be understood as time that meets an error specified in a protocol. That the second timer expires may be understood as the TA obtained by the terminal device is inaccurate, and the TA is not applicable to communication between the terminal device and the target cell after the cell switch.

Optionally, after the second timer expires, the terminal device may wait until a next period of the SSB of the neighboring cell, to perform re-measurement. Before the re-measurement, the TA is temporarily invalid.

Optionally, if the terminal device cannot perform data transmission in the serving cell when measuring the TA, the terminal device may determine, based on the timer and a position of a periodic SSB of the neighboring cell, a time domain resource that needs to be punctured for measurement. In this way, the terminal device can avoid interfering with data transmission in the serving cell while ensuring synchronization between the terminal device and the serving cell.

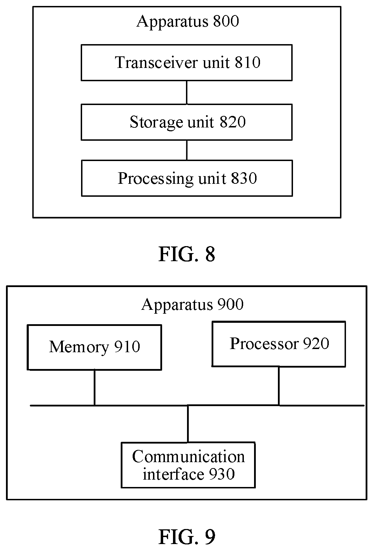

The foregoing describes the timing advance TA determining methods provided in embodiments of this application. The following describes an apparatus and a device according to embodiments of this application with reference to FIG. 8 and FIG. 9.

FIG. 8 is a diagram of a timing advance TA determining apparatus 800 according to an embodiment of this application. The apparatus 800 may include a transceiver unit 810, a storage unit 820, and a processing unit 830. The transceiver unit 810 is configured to receive and send instructions and/or data. The transceiver unit 810 may also be referred to as a communication interface or a communication unit. The storage unit 820 is configured to implement a corresponding storage function, and store corresponding instructions and/or data. The processing unit 830 may read the instructions and/or the data in the storage unit, to cause the apparatus 800 to implement the foregoing timing advance TA determining method.

In a design, the apparatus 800 includes: a transceiver unit 810, configured to receive a cell switch command sent by a serving cell; and a processing unit 830, configured to: determine whether the cell switch command includes a first TA; and communicate with a target cell by using the first TA if the cell switch command includes the first TA; or communicate with the target cell by using a second TA or a third TA if the cell switch command does not include the first TA, where the second TA is a TA determined by a terminal device based on a reference signal of the serving cell and a reference signal of the target cell, and the third TA is a TA determined by the terminal device in a random access procedure initiated to the target cell after the terminal device receives the cell switch command.

In a possible implementation, the processing unit 830 is further configured to determine that a first timer does not expire, where the first timer is a timer that starts timing after the terminal device sends a random access request to the target cell.

In a possible implementation, the second TA is obtained by the terminal device by measuring a synchronization signal block SSB of the serving cell and an SSB of the target cell at a first moment. The processing unit 830 is specifically configured to: communicate with the target cell by using the second TA if a second timer does not expire, where the second timer is a timer that starts timing from the first moment.

In a possible implementation, the processing unit 830 is specifically configured to: if the second timer expires, communicate with the target cell by using the third TA.

In a possible implementation, the processing unit 830 is specifically configured to: if the random access procedure is a contention-free random access procedure, communicate with the target cell by using the third TA.

In a possible implementation, the transceiver unit 810 is further configured to send capability information to the serving cell, where the capability information indicates a quantity of TAs that the terminal device can obtain from the target cell or maintain for the target cell.

In a design, the apparatus 800 includes: a transceiver unit 810, configured to receive a cell switch command sent by a serving cell, where the cell switch command includes a first TA; and a processing unit 830, configured to: obtain a third TA, where the third TA is a TA determined by a terminal device in a contention-free random access procedure initiated to a target cell after the terminal device receives the cell switch command; and communicate with the target cell by using the third TA.

In a possible implementation, the processing unit 830 is further configured to determine that a first timer expires, where the first timer is a timer that starts timing after a random access request is sent to the target cell.

In a possible implementation, the transceiver unit 810 is further configured to send capability information to the serving cell, where the capability information indicates a quantity of TAs that the terminal device can obtain from the target cell or maintain for the target cell.

In a design, the apparatus 800 includes: a processing unit 830, configured to: obtain a second TA and a third TA, where the second TA is a TA determined by a terminal device based on a reference signal of a serving cell and a reference signal of a target cell, and the third TA is a TA determined by the terminal device in a random access procedure initiated to the target cell after the terminal device receives a cell switch command; and determine, according to a preset rule, a target TA for communication with the target cell.

FIG. 9 is a diagram of another timing advance TA determining apparatus 900 according to an embodiment of this application.

The apparatus 900 includes a memory 910, a processor 920, and a communication interface 930. The memory 910, the processor 920, and the communication interface 930 are connected through an internal connection path. The memory 910 is configured to store instructions. The processor 920 is configured to execute the instructions stored in the memory 910, to control the communication interface 930 to obtain information, to cause the apparatus 900 to implement the foregoing timing advance TA determining method. Optionally, the memory 910 may be coupled to the processor 920 through an interface, or may be integrated with the processor 920.

It should be noted that the communication interface 930 uses a transceiver apparatus, for example, but not limited to, a transceiver. The communication interface 930 may further include an input/output interface (input/output interface).

The processor 920 stores one or more computer programs, and the one or more computer programs include instructions. When the instructions are run by the processor 920, the apparatus 900 is caused to perform the timing advance TA determining method in the foregoing embodiments.

It should be understood that the processor in embodiments of this application may be a central control unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should also be understood that, in embodiments of this application, the memory may include a read-only memory and a random access memory, and provide instructions and data to the processor. A part of the processor may further include a non-volatile random access memory. For example, the processor may further store information about a device type.

In an implementation process, steps of the foregoing methods can be implemented by using a hardware integrated logical circuit in the processor 920, or by using instructions in a form of software. The methods disclosed with reference to embodiments of this application may be directly performed and completed by a hardware processor, or may be performed and completed by using a combination of hardware and a software module in the processor. The software module may be located in a mature storage medium in the art, for example, a random access memory, a flash memory, a read-only memory, a programmable read-only memory, an electrically erasable programmable memory, or a register. The storage medium is located in the memory 910, and the processor 920 reads information in the memory 910 and completes the steps of the foregoing methods in combination with the hardware of the processor. To avoid repetition, details are not described herein again.

Optionally, the communication interface 930 in FIG. 9 may implement the transceiver unit 810 in FIG. 8, the memory 910 in FIG. 9 may implement the storage unit 820 in FIG. 8, and the processor 920 in FIG. 9 may implement the processing unit 830 in FIG. 8.

An embodiment of this application further provides a computer-readable storage medium. The computer-readable storage medium stores program code. When the computer program code is run on a computer, the computer is caused to perform any one of the methods in FIG. 5 to FIG. 7.

An embodiment of this application further provides a computer program product. The computer product includes a computer program. When the computer program is run, a computer is caused to perform any one of the methods in FIG. 5 to FIG. 7.

An embodiment of this application further provides a chip, including a circuit. The circuit is configured to perform any one of the methods in FIG. 5 to FIG. 7.

An embodiment of this application further provides a terminal device, including any timing advance determining apparatus shown in FIG. 8 or FIG. 9.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A timing advance TA determining method, wherein the method comprises:

    receiving a cell switch command sent by a serving cell;

determining whether the cell switch command comprises a first TA; and

communicating with a target cell by using the first TA if the cell switch command comprises the first TA; or communicating with the target cell by using a second TA or a third TA if the cell switch command does not comprise the first TA, wherein the second TA is a TA determined by a terminal device based on a reference signal of the serving cell and a reference signal of the target cell, and the third TA is a TA determined by the terminal device in a random access procedure initiated to the target cell after the terminal device receives the cell switch command.

2. The method according to claim 1, wherein before the communicating with the target cell by using the first TA, the method further comprises:
determining that a first timer does not expire, wherein the first timer is a timer that starts timing after the terminal device sends a random access request to the target cell.

3. The method according to claim 1, wherein the second TA is obtained by the terminal device by measuring a synchronization signal block SSB of the serving cell and an SSB of the target cell at a first moment, and the communicating with the target cell by using the second TA or the third TA comprises:
communicating with the target cell by using the second TA if a second timer does not expire, wherein the second timer is a timer that starts timing from the first moment.

4. The method according to claim 3, wherein the communicating with the target cell by using the second TA or the third TA comprises:
communicating with the target cell by using the third TA if the second timer expires.

5. The method according to claim 1, wherein the communicating with the target cell by using the second TA or the third TA comprises:
communicating with the target cell by using the third TA if the random access procedure is a contention-free random access procedure.

6. The method according to any one of claims 1 to 5, wherein before the receiving the cell switch command sent by the serving cell, the method further comprises:
sending capability information to the serving cell, wherein the capability information indicates a quantity of TAs that the terminal device can obtain from the target cell or maintain for the target cell.

7. The method according to any one of claims 1 to 6, wherein the method further comprises:

receiving configuration information sent by a network device, wherein the configuration information indicates the terminal device to autonomously obtain the second TA based on a configuration of the serving cell; and

determining the second TA based on the configuration information.

8. A timing advance TA determining method, wherein the method comprises:

receiving a cell switch command sent by a serving cell, wherein the cell switch command comprises a first TA; obtaining a third TA, wherein the third TA is a TA determined by the terminal device in a contention-free random access procedure initiated to a target cell after the terminal device receives the cell switch command; and communicating with the target cell by using the third TA.

9. The method according to claim 8, wherein before the communicating with the target cell by using the third TA, the method further comprises:
determining that a first timer expires, wherein the first timer is a timer that starts timing after a random access request is sent to the target cell.

10. The method according to claim 8 or 9, wherein before the receiving the cell switch command sent by the serving cell, the method further comprises:
sending capability information to the serving cell, wherein the capability information indicates a quantity of TAs that the terminal device can obtain from the target cell or maintain for the target cell.

11. A timing advance TA determining apparatus, wherein the apparatus comprises:

a transceiver unit, configured to receive a cell switch command sent by a serving cell; and

a processing unit, configured to:

determine whether the cell switch command comprises a first TA; and
communicate with a target cell by using the first TA if the cell switch command comprises the first TA; or communicate with the target cell by using a second TA or a third TA if the cell switch command does not comprise the first TA, wherein the second TA is a TA determined by a terminal device based on a reference signal of the serving cell and a reference signal of the target cell, and the third TA is a TA determined by the terminal device in a random access procedure initiated to the target cell after the terminal device receives the cell switch command.

12. The apparatus according to claim 11, wherein
the processing unit is further configured to determine that a first timer does not expire, wherein the first timer is a timer that starts timing after the terminal device sends a random access request to the target cell.

13. The apparatus according to claim 11, wherein the second TA is obtained by the terminal device by measuring a synchronization signal block SSB of the serving cell and an SSB of the target cell at a first moment; and
the processing unit is specifically configured to: communicate with the target cell by using the second TA if a second timer does not expire, wherein the second timer is a timer that starts timing from the first moment.

14. The apparatus according to claim 13, wherein
the processing unit is specifically configured to: communicate with the target cell by using the third TA if the second timer expires.

15. The apparatus according to claim 11, wherein
the processing unit is specifically configured to: communicate with the target cell by using the third TA if the random access procedure is a contention-free random access procedure.

16. The apparatus according to any one of claims 11 to 15, wherein
the transceiver unit is further configured to send capability information to the serving cell, wherein the capability information indicates a quantity of TAs that the terminal device can obtain from the target cell or maintain for the target cell.

17. The apparatus according to any one of claims 11 to 16, wherein

the transceiver unit is further configured to receive configuration information sent by a network device, wherein the configuration information indicates the terminal device to autonomously obtain the second TA based on a configuration of the serving cell; and
the processing unit is further configured to determine the second TA based on the configuration information.

18. A timing advance TA determining apparatus, wherein the apparatus comprises:

a transceiver unit, configured to receive a cell switch command sent by a serving cell, wherein the cell switch command comprises a first TA; and
a processing unit, configured to:

obtain a third TA, wherein the third TA is a TA determined by the terminal device in a contention-free random access procedure initiated to a target cell after the terminal device receives the cell switch command; and communicate with the target cell by using the third TA.

19. The apparatus according to claim 18, wherein
the processing unit is further configured to determine that a first timer expires, wherein the first timer is a timer that starts timing after a random access request is sent to the target cell.

20. The apparatus according to claim 18 or 19, wherein
the transceiver unit is further configured to send capability information to the serving cell, wherein the capability information indicates a quantity of TAs that the terminal device can obtain from the target cell or maintain for the target cell.

**21.** A timing advance TA determining apparatus, comprising a processor and a memory, wherein the processor is coupled to the memory, and is configured to read and execute instructions in the memory, to perform the method according to any one of claims 1 to 7.

**22.** A timing advance TA determining apparatus, comprising a processor and a memory, wherein the processor is coupled to the memory, and is configured to read and execute instructions in the memory, to perform the method according to any one of claims 8 to 10.

**23.** A computer-readable storage medium, wherein the computer-readable storage medium stores program code, and when the computer program code is run on a computer, the computer is caused to perform the method according to any one of claims 1 to 10.

**24.** A chip, comprising a circuit, wherein the circuit is configured to perform the method according to any one of claims 1 to 10.

**25.** A terminal device, comprising the apparatus according to any one of claims 11 to 22.

FIG. 1

FIG. 2

FIG. 3

CC 1+CC 2                                    CC 2+CC 3

Serving cell                                  Target cell

FIG. 4

<u>500</u>

| Terminal device | | Serving cell |

S501: Cell switch command

S502: Determine whether the cell switch command includes a first TA

S503: Communicate with a target cell by using the first TA if the cell switch command includes the first TA, or communicate with the target cell by using a second TA or a third TA if the cell switch command does not include the first TA

FIG. 5

600

```
┌──────────┐                                              ┌──────────┐
│ Terminal │                                              │ Serving  │
│  device  │                                              │   cell   │
└──────────┘                                              └──────────┘
      ╎                                                          ╎
      ╎◄──────  S601: Cell switch command  ───────               ╎
      ╎            (including a first TA)                         ╎
      ╎                                                          ╎
┌─────────────────────────────┐                                  ╎
│  S602: Obtain a third TA     │                                  ╎
└─────────────────────────────┘                                  ╎
      ╎                                                          ╎
┌─────────────────────────────┐                                  ╎
│  S603: Communicate with a    │                                  ╎
│ target cell by using the third TA│                              ╎
└─────────────────────────────┘                                  ╎
      ╎                                                          ╎
```

## FIG. 6

700

```
┌──────────┐                    ┌──────────────┐              ┌──────────────┐
│ Terminal │                    │ Serving cell │              │  Target cell │
│  device  │                    └──────────────┘              └──────────────┘
└──────────┘                           ╎                             ╎
      ╎◄──  S701: Capability  ─────     ╎                             ╎
      ╎      request information        ╎                             ╎
      ╎                                 ╎                             ╎
      ╎─── S702: Capability  ─────►     ╎                             ╎
      ╎         information             ╎                             ╎
      ╎                                 ╎                             ╎
      ╎◄──  S703: TA obtaining  ────    ╎                             ╎
      ╎      indication information     ╎                             ╎
      ╎                                 ╎                             ╎
      ╎◄───────── S704: Measurement reference signal ──────────────────╎
      ╎       S705: TA obtaining        ╎                             ╎
      ╎──── success acknowledgment ──►  ╎                             ╎
      ╎         information             ╎                             ╎
      ╎◄──── S706: Switch command ───   ╎                             ╎
┌─────────────────────┐                 ╎                             ╎
│ S707: Determine,     │                 ╎                             ╎
│ according to a rule, a│                 ╎                             ╎
│ TA that is after switch│                 ╎                             ╎
└─────────────────────┘                 ╎                             ╎
      ╎                                 ╎                             ╎
```

## FIG. 7

Apparatus 800

Transceiver unit 810

Storage unit 820

Processing unit 830

**FIG. 8**

Apparatus 900

Memory 910

Processor 920

Communication interface 930

**FIG. 9**

## INTERNATIONAL SEARCH REPORT

| International application No. |
|---|
| **PCT/CN2024/111089** |

**A. CLASSIFICATION OF SUBJECT MATTER**

H04W 56/00(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, CNTXT, ENTXT, ENTXTC, DWPI: 参考信号, 定时, 命令, 目标, 目的, 切换, 确定, 小区, 测量, 随机接入, RAR, csc, timing advance, TA, hand, off, over, source, SRS, command, target, destinat+, candidate, cell, RACH

**C. DOCUMENTS CONSIDERED TO BE RELEVANT**

| Category* | Citation of document, with indication, where appropriate, of the relevant passages | Relevant to claim No. |
|---|---|---|
| X | GOOGLE. "Discussion on timing advance management to reduce latency" *3GPP TSG RAN WG1 #112bis-e, R1-2303519*, 26 April 2023 (2023-04-26), sections 2-3 | 1-25 |
| A | CATT. "Discussion on timing advance management to reduce latency" *3GPP TSG RAN WG1 #111, R1-2211181*, 18 November 2022 (2022-11-18), entire document | 1-25 |
| A | CN 111585732 A (HUAWEI TECHNOLOGIES CO., LTD.) 25 August 2020 (2020-08-25) entire document | 1-25 |
| A | CN 114830753 A (QUALCOMM INC.) 29 July 2022 (2022-07-29) entire document | 1-25 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 November 2024** | **21 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/111089**

| Patent document cited in search report | | | Publication date (day/month/year) | Patent family member(s) | | | Publication date (day/month/year) |
|---|---|---|---|---|---|---|---|
| CN | 111585732 | A | 25 August 2020 | WO | 2020164514 | A1 | 20 August 2020 |
| | | | | KR | 20210125573 | A | 18 October 2021 |
| | | | | IN | 202127038320 | A | 12 November 2021 |
| | | | | US | 2021377892 | A1 | 02 December 2021 |
| | | | | EP | 3923501 | A1 | 15 December 2021 |
| CN | 114830753 | A | 29 July 2022 | US | 2021195547 | A1 | 24 June 2021 |
| | | | | EP | 4082261 | A1 | 02 November 2022 |
| | | | | WO | 2021133879 | A1 | 01 July 2021 |
| | | | | IN | 202247029814 | A | 24 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311018822